# EUROPÄISCHE PATENTSCHRIFT

(11) **EP 1 328 370 B1**
(45) Veröffentlichungstag und Bekanntmachung des Hinweises auf die Patenterteilung: **22.08.2007**
(21) Anmeldenummer: 01973795.6
(22) Anmeldetag: 05.10.2001
(51) Int. Cl.: B23K 9/00

(54) **VERFAHREN ZUM STEUERN UND/ODER REGELN EINES SCHWEISSPROZESSES**
METHOD FOR THE CONTROL AND/OR REGULATION OF A WELDING PROCESS
PROCEDE DE COMMANDE ET/OU DE REGULATION D'UN PROCESSUS DE SOUDAGE

(30) Priorität: 17.10.2000 AT 178400
(43) Veröffentlichungstag der Anmeldung: 23.07.2003
(60) Teilanmeldung: 05013207.5
(73) Patentinhaber: Fronius International GmbH, 4643 Pettenbach (AT)
(72) Erfinder: ZAUNER, Michael, A-4072 Alkoven (AT); HIESMAYR, Alfred, A-4642 Sattledt (AT)
(74) Vertreter: Secklehner, Günter
(86) Internationale Anmeldenummer: PCT/AT2001/000321
(87) Internationale Veröffentlichungsnummer: WO 2002/032610

(56) Entgegenhaltungen:
- EP-A- 0 901 865
- WO-A-99/58286
- DE-A- 19 733 638
- DE-U- 9 301 390
- GB-A- 1 574 190
- US-A- 2 424 324
- US-A- 4 093 844
- US-A- 4 100 390
- US-A- 5 278 390
- PATENT ABSTRACTS OF JAPAN vol. 009, no. 042 (M-359), 22. Februar 1985 (1985-02-22) & JP 59 183975 A (MITSUBISHI DENKI KK), 19. Oktober 1984 (1984-10-19)
- PATENT ABSTRACTS OF JAPAN vol. 007, no. 012 (M-186), 19. Januar 1983 (1983-01-19) & JP 57 168770 A (KOBE SEIKOSHO KK), 18. Oktober 1982 (1982-10-18)

## Beschreibung

Die Erfindung betrifft ein Verfahren zum Steuern und/oder Regeln eines Schweißprozesses wie dies im Oberbegriff des Anspruchs 1 beschrieben ist, und ein Schweißgerät mit einer Schweißstromquelle, einer Steuervorrichtung und einem Schweißbrenner, wie es im Oberbegriff des Anspruches 7 beschrieben ist. Ein solches Verfahren und Schweißgerät sind aus US 2 424 324 A bekannt.

Es sind bereits Schweißgeräte bekannt, bei denen während eines Schweißprozesses eine Umschaltung des Schweißgerätes möglich ist, wobei hierzu zum Umschalten des Schweißgerätes ein Schaltelement, wie beispielsweise eine Brennertaste, aktiviert werden muß.

Weiters sind Schweißgeräte bekannt, bei denen über eine Ein- und/oder Ausgabevorrichtung unterschiedliche Schweißparameter und/oder Betriebsarten für einen Schweißprozeß eingestellt werden. Die Ein- und/oder Ausgabevorrichtung wird aus zumindest einem Taster für die Betriebsarten und einem Drehgeber für die Sollwerte sowie einem oder mehreren Anzeigeelementen, wie beispielsweise einer Leuchtdiode, gebildet, wobei die Einstellungen von der Ein- und/oder Ausgabevorrichtung an eine Steuervorrichtung zur Durchführung eines entsprechenden Schweißprozesses übergeben werden. Nachteilig ist hierbei, daß für jede mögliche Einstellung des Schweißgerätes zumindest ein Taster oder ein Drehgeber angeordnet ist.

So ist aus der US 2 424 324 A ein Verfahren und eine Vorrichtung zum Steuern und/oder Regeln eines Schweißgerätes beschrieben, bei dem verhindert werden soll, dass beim Beenden eines Schweißprozesses am Werkstück eine kraterförmige Ausbildung der Schweißnaht entsteht. Hierbei wird der Schweißstrom derart gesteuert, dass dieser vor dem Erlöschen des Lichtbogens auf einem geringeren Wert vom Schweißgerät automatisch abgesenkt wird. Dies erfolgt derart, dass beim Wegbewegen der Elektrode vom Werkstück der Lichtbügenwiderstand vergrößert wird und sich somit die Schweißspannung reduziert. Unterschreitet die Schweißspannung einen bestimmten Wert, so wird der Schweißstrom auf einen geringem Wert reduziert. Nachteilig ist hierbei, dass bei einer zu schnellen Abhebbewegung des Schweißbrenners vom Werkstück der Lichtbogen erlischt, bevor eine kontrollierte Absenkung des Schweißstromes durchgeführt werden könnte.

Aus der DE 197 33 638 A ist ein Verfahren und eine Vorrichtung zur Steuerung eines Schweißgerätes bekannt, bei dem eine Vielzahl von Parametern und Bediengrößen über min destens ein Stellmittel veränderbar sind. Mit dem Stellmittel am Schweißgerät wird in einer Arbeitsstellung eine kontinuierliche Veränderung eines ersten Signals und in einer zweiten Arbeitsstellung mindestens ein Schaltsignal erzeugt. Die Parameter des Schweißvorgangs werden auf einer Anzeigevorrichtung angezeigt und mittels des Schaltsignals ist ein Auslöse- oder Bestätigungssignal für die Aktivierung des Parameters oder einer Umschaltung für weitere Parameter erzeugbar. Nachteilig ist hierbei, dass zum Umschalten der Schweißparameter der Benutzer diese Einstellungen am Schweißgerät vornehmen muß, wodurch er den Schweißprozeß unterbrechen muß. Bei derartigen Schweißgeräten werden die einzelnen Einstellungen vor dem Start des Schweißprozesses vorgenommen, sodass anschließend nach dem Zünden des Lichtbogens der Schweißprozeß, insbesondere die Schweißspannung und/oder der Schweißstrom, entsprechend den eingestellten Parametern automatisch abläuft und keinerlei Umschaltung der Parameter während des Schweißprozesses vorgenommen wird.

Weiters ist in der US 4 093 844 A ein Schweißgerät, bei dem eine optische Einrichtung zur Ermittlung des Abstandes zwischen den Schweißbrenner und dem Werkstück angeordnet ist, gezeigt.

Aus der DE 93 01 390 U ist ein Schweißgerät bekannt, bei dem auf der Bedienungsfläche eine Anzeigefläche mit einer Mehrzahl von verschiedenen, elektronisch angesteuerten Anzeigepositionen für verschiedene Funktionen des Schweißgerätes vorgesehen sind. Mit einem ersten Betätigungselement für die Funktionsauswahl wird die einzustellende Anzeigeposition ausgewählt und mit einem zweiten Betätigungselement für die Einstellung der Anzeige wird der einzustellende Wert verändert. Nachteilig ist hierbei, dass für sämtliche Einstellmöglichkeiten jeweils eine eigene Anzeigeposition notwendig ist und somit immer nur die notwendigsten Parameter an der Bedienungsoberfläche ausgeführt werden können, um eine übersichtliche Gestaltung des Schweißgerätes zu erreichen.

Der Erfindung liegt die Aufgabe zugrunde, ein Verfahren zum Steuern und/oder Regeln eines Schweißprozesses, bei dem eine Umschaltung des Schweißgerätes ohne Betätigung eines Schaltelementes während eines Schweißprozesses ermöglicht wird, sowie eine verbesserte Einstellmöglichkeit bzw. Handhabung des Schweißgerätes erzielt wird.

Diese Aufgabe der Erfindung wird durch die Merkmale des Anspruches 1 gelöst.

Vorteilhaft ist dabei, daß zum Beenden des Schweißprozesses ohne Unterbrechung des Lichtbogens durch eine definierte Bewegung des Schweißbrenners ein Schweißendeprogramm aufgerufen wird, wobei zum Aktivierten des Schweißendeprogrammes ein Schweißparameter, insbesondere die Schweiß- oder Lichtbogenspannung und/oder der Schweißstrom, überwacht wird und bei Überschreiten und/oder Unterschreiten eines vorgegebenen Schwellwertes des Schweißparameters das Schweißendeprogramm freigegeben bzw. ausgeführt wird. Vorteilhaft ist hierbei, daß der Schweißbrenner ohne eine Brennertaste aufgebaut werden kann, da die Aktivierung des Schweißprogrammes "Schweißende", also des Schweißendeprogrammes, über einen vom Benutzer während des Schweißprozesses beeinflußbaren Schweißparameter, insbesondere über die Schweiß- oder Lichtbogenspannung oder den Schweißstrom, durchgeführt wird und somit ein vereinfachter Aufbau sowie eine kostengünstige Herstellung des Schweißbrenners ermöglicht wird.

Weitere vorteilhafte Ausbildungen sind in den Ansprüchen 2 bis 6 beschrieben. Die sich daraus ergebenden Vorteile sind der Beschreibung zu entnehmen.

Die Aufgabe der Erfindung wird unabhängig davon auch durch die Merkmale im Kennzeichenteil des Anspruches 7, gelöst. Vorteilhaft ist hierbei, daß eine sehr einfache und kostengünstige Herstellung des Schweißgerätes und des Schweißbrenners ermöglicht wird, wobei beim Schweißbrenner auf eine Prozeßsteuertaste verzichtet werden kann, wodurch die Anzahl der Verschweißteile des Schweißbrenners reduziert werden kann.

Eine vorteilhafte Ausbildung ist im Anspruch 8 beschrieben. Die sich daraus ergebenden Vorteile sind der Beschreibung zu entnehmen.

Die Erfindung wird anschließend durch Ausführungsbeispiele näher beschrieben.

Es zeigen:
- Fig. 1: eine schematische Darstellung einer Schweißmaschine bzw. eines Schweißgerätes;
- Fig. 2: ein Ablaufdiagramm eines Schweißprozesses eines Schweißgerätes in vereinfachter, schematischer Darstellung;
- Fig. 3: ein weiteres, nicht erfindunsgemäßes Ablaufdiagramm eines weiteren möglichen Schweißprozesses eines Schweißgerätes in vereinfachter, schematischer Darstellung;
- Fig. 4: eine Frontansicht eines nicht erfindungsgemäßen Schweißgerätes mit einer Ein- und/oder Ausgabevorrichtung, in vereinfachter, schematischer Darstellung;
- Fig. 5: eine Frontansicht eines weiteren Ausführungsbeispieles eines nicht erfindungsgemäßen Schweißgerätes mit einer Ein- und/oder Ausgabevorrichtung in vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

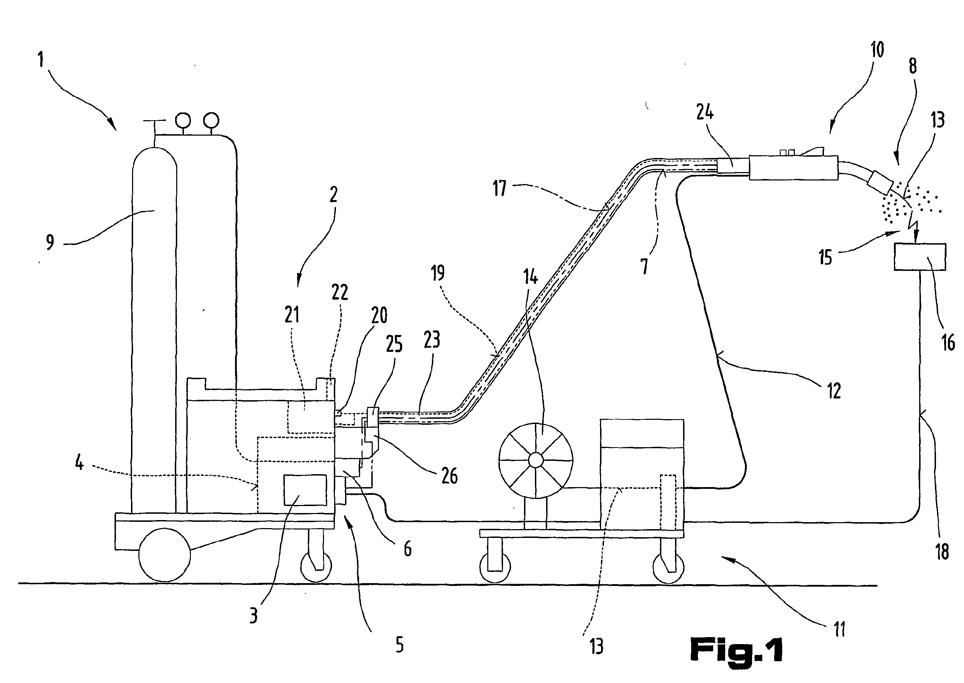

In Fig. 1 ist eine Schweißanlage bzw. ein Schweißgerät 1 für verschiedenste Schweißverfahren, wie z.B. MIG/MAG-Schweißen bzw. TIG-Schweißen oder Elektroden-Schweißverfahren usw., gezeigt. Selbstverständlich ist es möglich, daß die erfindungsgemäße Lösung bei einer Stromquelle bzw. einer Schweißstromquelle eingesetzt werden kann.

Das Schweißgerät 1 umfaßt eine Schweißstromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO2, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbauen eines Lichtbogens 15 zwischen dem Schweißdraht 13 und einem Werkstück 16 wird über eine Schweißleitung 17 vom Leistungsteil 3 der Schweißstromquelle 2 dem Schweißbrenner 10 bzw. dem Schweißdraht 13 zugeführt, wobei das zu verschweißende Werkstück 16 über eine weitere Schweißleitung 18 ebenfalls mit dem Schweißgerät 1, insbesondere mit der Schweißstromquelle 2, verbunden ist und somit über den Lichtbogen 15 für einen Schweißprozeß ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bzw. des Schweißdrahtes 13 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

Grundsätzlich ist zu erwähnen, daß für die unterschiedlichen Schweißverfahren bzw. Schweißgeräte, wie beispielsweise WIG-Geräte oder MIG/MAG-Geräte, nicht alle zuvor benannten Komponenten verwendet bzw. eingesetzt werden müssen.

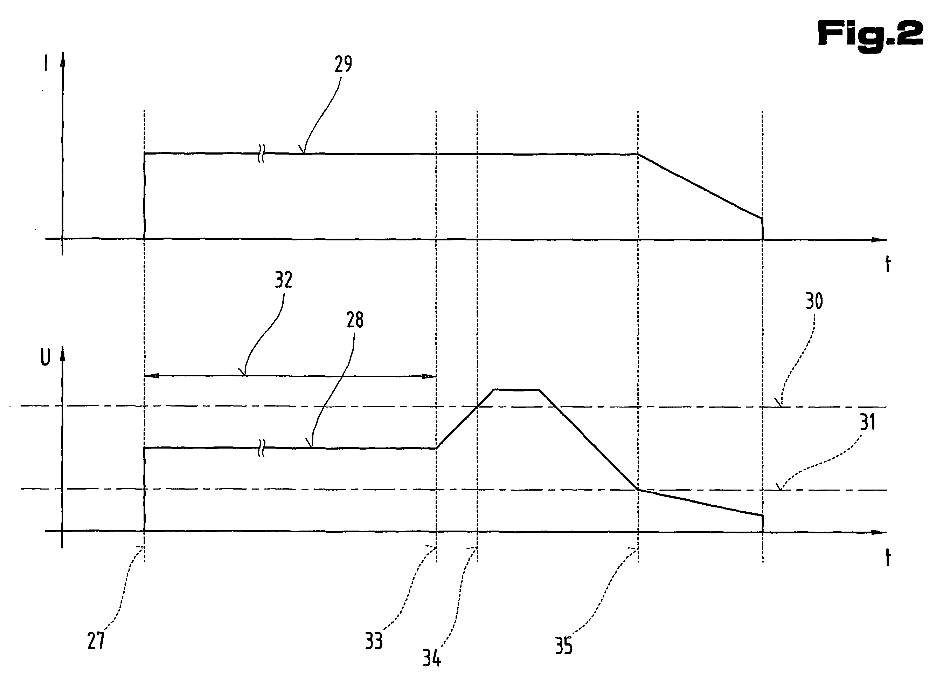

In Fig. 2 sind vereinfacht dargestellte Diagramme einer Ausgangskennlinie des Schweißgerätes 1, insbesondere eines WIG-Schweißgerätes, für ein Verfahren zum Steuern oder Regeln eines Schweißprozesses gezeigt, wobei auf der Ordinate des ersten Diagramms der Ausgangsstrom I und auf der Ordinate des zweiten Diagramms die Ausgangsspannung U zeitsynchron aufgetragen sind. Auf der Abszisse der beiden Diagramme ist die Zeit t eingetragen.

Wie aus der Zusammenschau der beiden Diagramme in Fig. 2 ersichtlich ist, wird zu einem beliebigen Zeitpunkt 27 ein Schweißprozeß gestartet, d.h., daß der Lichtbogen 15 zwischen dem Werkstück 16 und dem Schweißdraht 13 gezündet wird, wobei nach dem Zünden des Lichtbogens 15 der eingestellte Schweißprozeß durchgeführt wird. Die Steuerung und/oder Regelung des Schweißprozesses entsprechend den vorgegebenen Schweißparametern und/oder der Betriebsart und/oder dem eingestellten Schweißprogramm wird von der Steuervorrichtung 4 und/oder der Schweißstromquelle 2, wie es aus dem Stand der Technik für handelsübliche Schweißgeräte bekannt ist, durchgeführt.

Um ein definiertes Schweißende des Schweißprozesses zu erreichen, wird zum Beenden des Schweißprozesses ein Schweißendeprogramm, also ein sogenannter Downslope, durchgeführt, sodaß zum Beenden des Lichtbogens 15 die wesentlichen Schweißparameter, wie der Schweißstrom, die Schweißspannung, Gaszuführung usw., nach einem vorgegebenen Ablaufprinzip, insbesondere dem vordefinierten Schweißendeprogramm, beendet werden, wobei hierzu jedes beliebige, aus dem Stand der Technik bekannte Ablauf- bzw. Funktionsprinzip verwendet bzw. durchgeführt werden kann. Durch ein derartiges Vorgehen, also durch ein gesteuertes Schweißende, wird erreicht, daß dadurch eine Qualitätsverbesserung der Schweißnaht erzielt wird.

Damit ein definierter Start des Schweißendeprogrammes ohne Betätigung eines Schaltelementes, wie beispielsweise einem aus dem Stand der Technik bekannten Schweißbrennertaster, durchgeführt werden kann, wird zum Aktivierten des Schweißendeprogrammes die Schweiß- oder Lichtbogenspannung 28 und/oder der Schweißstrom 29 überwacht, d.h., daß die Lichtbogenspannung am Schweißbrenner oder die Ausgangsspannung vom Schweißgerät 1, die im wesentlichen der Lichtbogenspannung entspricht, und/oder ein Schweißstrom 29 erfaßt wird und der entsprechende Istwert an die Steuervorrichtung 4 des Schweißgerätes 1 weitergeleitet wird. Grundsätzlich ist hierzu zu erwähnen, daß die Regelung bzw. Steuerung der Schweiß-stromquelle 2 auf den konstanten Schweißstrom 29 oder einer konstanten Schweißspannung durchgeführt wird, sodaß am Ausgang des Schweißgerätes 1 immer ein konstanter voreingestellter Schweißstrom 29 oder eine konstante Schweißspannung 28 zur Verfügung steht, wobei die Ausregelung der Stromabweichungen bzw. Spannungsabweichungen von dem voreingestellten Sollstrom oder der Sollspannung über die Schweiß- oder Lichtbogenspannung 28 oder dem Schweißstrom 29 erfolgt.

Dadurch ist es möglich, daß die Einleitung des Schweißendeprogrammes bei dem gezeigten Ausführungsbeispiel in Abhängigkeit der Schweiß- oder Lichtbogenspannung 28 erfolgen kann, wobei hierzu ein oberer und ein unterer Schwellwert 30, 31, schematisch dargestellt, für die Aktivierung des Schweißendeprogrammes festgelegt wird. Dabei ist es möglich, daß die Schwellwerte 30, 31 für die Schweiß- oder Lichtbogenspannung 28 zum Aktivieren des Schweißendeprogrammes oder eines anderen Ablaufprinzips bzw. Schweißprogrammes entsprechend dem eingestellten Schweißprozeß, insbesondere dem eingestellten Schweißstrom, von der Steuervorrichtung 4 - in Fig. 2 nicht dargestellt - berechnet bzw. festgelegt werden.

Dadurch wird erreicht, daß bei den unterschiedlichsten Schweißverfahren bzw. Betriebsarten diese Schwellwerte 30, 31 immer in Abhängigkeit der eingestellten oder der sich ergebenden Schweiß- oder Lichtbogenspannung 28 und/oder des Schweißstromes 29 durch den eingestellten Schweißstrom 29 und/oder der Schweiß- oder Lichtbogenspannung 28 definiert werden, sodaß sich der Bereich der Schweiß- oder Lichtbogenspannung 28 während eines vorgegebenen Schweißprozesses immer innerhalb der beiden Schwellwerte 30, 31 befindet und somit ein entsprechend definierter Toleranzbereich gegeben ist.

Wie nun aus den Diagrammen in Fig. 2 ersichtlich ist, wird nach dem Zünden des Lichtbogens 15 zum Zeitpunkt 27 der eingestellte Schweißprozeß über eine beliebige Zeitdauer 32 durchgeführt. Zu einem beliebigen weiteren Zeitpunkt 33 soll nunmehr der Schweißprozeß beendet werden, wodurch die Aktivierung des Schweißendeprogrammes stattfinden muß. Hierzu wird ab dem Zeitpunkt 33 bewußt die Schweiß- oder Lichtbogenspannung 28 über den oberen Schwellwert 31 erhöht. Dies erfolgt derartig, daß durch Verlängern des Lichtbogens 15, also durch die gezielte Entfernung des Schweißbrenners 10 vom Werkstück 16, die Schweiß- oder Lichtbogenspannung 28 von der Schweißstromquelle 2 erhöht wird, damit durch die Verlängerung des Lichtbogens 15 der eingestellte Schweißstrom 29 konstant gehalten werden kann, sodaß ein Anstieg der Schweiß- oder Lichtbogenspannung 28 über den ersten, oberen Schwellwert 30 erfolgt. Dies ist zum Zeitpunkt 34 ersichtlich.

Das Überschreiten bzw. Erreichen des oberen Schwellwertes 30, wie zum Zeitpunkt 34 ersichtlich, wird von der Steuervorrichtung 4 durch einen einfachen Soll/Ist-Vergleich der Schweiß- oder Lichtbogenspannung 28 mit dem festgelegten Schwellwerten 30, 31 erkannt. Daraufhin wird von der Steuervorrichtung 4 das Schweißendeprogramm freigegeben, d.h., daß die für das Schweißendeprogramm hinterlegten Abläufe bzw. Funktionen geladen werden. Der Schweißprozeß kann vom Benutzer unabhängig von dem Laden bzw. der Freigabe des Schweißendeprogrammes ohne Unterbrechung weiter fortgesetzt werden. Dabei ist es auch möglich, daß die Schweiß- oder Lichtbogenspannung 28 wieder auf den ursprünglichen Wert abgesenkt werden kann, d.h., daß der Benutzer den Schweißbrenner 10 wiederum in Richtung des Werkstückes 16, also in die ursprüngliche Schweißposition bewegt, sodaß eine Verringerung der Schweiß- oder Lichtbogenspannung 28 eintritt. Das Freigeben des Schweißendeprogrammes bewirkt nur, daß sämtliche Abläufe für das Beenden des Schweißprozesses geladen werden bzw. aktiviert werden, sodaß jederzeit der Schweißprozeß beendet werden kann.

Um nunmehr den Schweißprozeß definiert beenden zu können, muß in dem gezeigten Ausführungsbeispiel die Schweiß- oder Lichtbogenspannung 28 den weiteren unteren Schwellwert 31 unterschreiten, d.h., daß bei Unterschreiten des weiteren Schwellwertes 31 der Schweiß- oder Lichtbogenspannung 28, wie zu einem Zeitpunkt 35 ersichtlich, das Schweißendeprogramm ausgeführt wird. Dies kann vom Benutzer derart gesteuert werden, daß dieser den Schweißbrenner 10 in Richtung des Werkstückes 16 bewegt, wodurch eine Verkürzung des Lichtbogens 15 erfolgt und somit von der Schweißstromquelle 2 zur Konstanthaltung des Schweißstromes 29 die Schweiß- oder Lichtbogenspannung 28 reduziert wird, d.h., daß durch Verkleinerung des Lichtbogens 15, also durch das Hinzubewegen des Schweißbrenners 10 zum Werkstück 16, die Schweiß- oder Lichtbogenspannung 28 verringert wird, sodaß durch einen einfachen Soll/Ist-Vergleich die Steuervorrichtung 4 das Unterschreiten des unteren Schwellwertes 31, wie zum Zeitpunkt 35 ersichtlich, feststellen kann und somit die definierten Abläufe des Schweißendeprogrammes durchführt. Eine derartige Steuerung ist insofern möglich, da durch das Bewegen des Schweißbrenners 10 sich der Widerstand für den Lichtbogen 15 ändert und somit von der Steuervorrichtung 4 und/oder der Schweißstromquelle 2 eine entsprechende Anpassung der Schweiß- oder Lichtbogenspannung 28 oder des Schweißstromes 29 durchgeführt wird.

Beim Durchführen des Schweißendeprogrammes wird der Schweißprozeß, insbesondere der Schweißstrom 29, entsprechend einer vorgegebenen Funktion bzw. Kennlinie beendet. Dabei wird der Schweißstrom 29 entsprechend einer rampenförmigen Kennlinie abgesenkt. Durch das Schweißendeprogramm wird beispielsweise erreicht, daß der Schweißstrom 29 rampenförmig reduziert wird und gleichzeitig der Gasschutz für die Schweißnaht und den Schweißdraht 13, also für die Elektrode bzw. der WIG-Nadel, aufrecht erhalten bleibt, sodaß eine wesentliche Verbesserung der Schweißqualität am Schweißnahtende erzielt wird.

Durch das Verwenden von zwei Schwellwerten 30, 31 kann der Benutzer frühzeitig das Ende des Schweißprozesses durch Überschreiten des ersten Schwellwertes 30 einleiten, wobei jedoch der Schweißprozeß noch beliebig lange weitergeführt werden kann. Erst bei Unterschreiten des zweiten Schwellwertes 31 wird das tatsächliche Ende des Schweißprozesses von der Steuervorrichtung 4 gesteuert durchgeführt. Dadurch wird erreicht, daß ein langsames Abkühlen des Werkstückes 16 und der Schweißnaht ermöglicht wird, wodurch eine Kraterbildung am Schweißnahtende verhindert werden kann.

Es ist weiters auch möglich, daß nur ein Schwellwert 30 oder 31 definiert wird, wobei dieser beispielsweise zweimal oder mehrmals über- bzw. unterschritten werden muß, um die Aktivierung des Schweißendeprogrammes einzuleiten.

Bei einem derartigen Verfahren ist zu beachten, daß die Höhe der Schwellwerte 30, 31 derartig definiert werden, daß bei einer normalen Regelung bzw. Steuerung des Schweißprozesses es nicht zu einem ungewollten Überschreiten oder Unterschreiten eines Schwellwertes 30, 31 kommen kann, d.h., daß ungewollt vom Benutzer die Schweiß- oder Lichtbogenspannung 28 und/oder der Schweißstrom 29 zur Konstanthaltung des Schweißstromes 29 und/oder der Schweiß- oder Lichtbogenspannung 28 diese von der Steuervorrichtung 4 bzw. der Schweißstromquelle 2 nicht über die Schwellwerte 30, 31 angehoben oder abgesenkt wird bzw. werden. Hierzu ist es beispielsweise möglich, daß zur bewußten Auslösung bzw. Aktivierung die Schweiß- oder Lichtbogenspannung 28 und/oder des Schweißstromes 29 über eine definierte Zeitdauer den entsprechenden Schwellwert 30, 31 über- bzw. unterschreiten muß, sodaß ein kurzzeitiges Überschreiten oder Unterschreiten der Schwellwerte 30, 31 von der Steuervorrichtung 4 nicht anerkannt wird. Somit kann verhindert werden, daß die Steuervorrichtung 4 bei entsprechenden Regelungen oder Steuerungen für den normalen Schweißprozeß, wie beispielsweise beim Auftreten eines Kurzschlusses, nicht unbewußt das Schweißendeprogramm freigibt bzw. durchführt.

Es kann also gesagt werden, daß zum Beenden des Schweißprozesses ein Schweißendeprogramm durchgeführt wird, wobei zum Aktivierten des Schweißendeprogrammes ein beeinflußbarer Schweißparameter, insbesondere die Schweiß- oder Lichtbogenspannung 28 und/oder der Schweißstrom 29, überwacht wird und bei Überschreiten eines vorgegebenen Schwellwertes 30, 31 des Schweißparameters, insbesondere der Schweiß- oder Lichtbogenspannung 28 und/oder des Schweißstromes 29, das Schweißendeprogramm freigegeben bzw. ausgeführt wird.

Ein wesentlicher Vorteil einer derartigen Steuerung des Schweißgerätes 1 am Ende des Schweißprozesses liegt darin, daß der Schweißbrenner 10 ohne eine Brennertaste aufgebaut werden kann, da die Aktivierung des Schweißprogrammes "Schweißende", also des Schweißendeprogrammes, über einen vom Benutzer während des Schweißprozesses beeinflußbaren Schweißparameter, insbesondere über die Schweiß- oder Lichtbogenspannung 28 und/oder die Lichtbogenlänge und/oder den Schweißstrom 29, durchgeführt wird und somit ein vereinfachter Aufbau sowie eine kostengünstige Herstellung des Schweißbrenners 10 ermöglicht wird. Dadurch wird auch eine komfortablere Handhabung des Schweißbrenners erzielt.

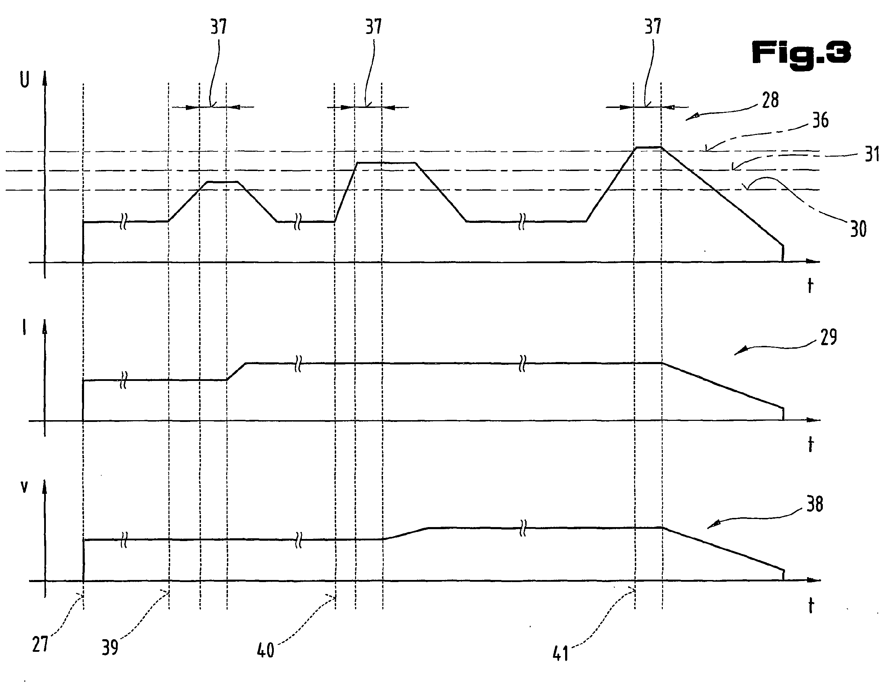

Bei dem nicht erfindungsgmäßen Ausführungsbeispiel in Fig. 3 werden nunmehr mehrere, insbesondere drei Schwellwerte 30, 31, 36 festgelegt bzw. definiert, wobei bei Über- und/oder Unterschreiten dieser Schwellwerte 30, 31, 36 von der Steuervorrichtung 4 ohne Beendigung des Schweißprozesses, also ohne Beendigung des Lichtbogens 15 (siehe Fig. 1), mehrere Funktionen, wie beispielsweise eine Umschaltung von einem Schweißstrom 29 auf einen weiteren höheren Schweißstrom 29, durchgeführt werden. Selbstverständlich ist es dabei möglich, daß beliebige Schweißparameter bzw. Schweißprogramme aufgerufen bzw. ausgeführt werden können.

Wesentlich ist dabei, daß die Aktivierung bzw. Umschaltung der Funktionen, der Betriebsarten, der Schweißparameter oder der Schweißprogramme von der Steuervorrichtung 4 und/oder der Schweißstromquelle 2 ohne Unterbrechung des gerade durchgeführten Schweißprozesses, also ohne Unterbrechung des Lichtbogens 15, durchgeführt wird, wobei der Benutzer hierzu keinerlei Bedienelemente, wie einen Schweißbrennertaster, betätigen muß, sondern die Umschaltung durch die Verlängerung oder Verkürzung des Lichtbogens 15, also der Lichtbogenlänge, gesteuert wird, d.h., daß durch die Bewegung des Schweißbrenners 10 vom und/oder zum Werkstück 16 die Lichtbogenlänge und somit ein entsprechender Schweißparameter, wie in diesem Fall die Schweiß- oder Lichtbogenspannung 28, bewußt verändert wird.

Durch Festlegen mehrerer Schwellwerte 30, 31, 36, wie dies in Fig. 3 ersichtlich ist, können nunmehr mehrere unterschiedliche Funktionen oder Abläufe durchgeführt werden, wobei für jeden Schwellwert 30, 31, 36 eine entsprechende Funktion bzw. ein Ablauf hinterlegt ist.

Hierzu ist es beispielsweise möglich, daß entsprechend den vorhandenen Schwellwerten 30, 31, 36 am Schweißbrenner 10 entsprechende Anzeigeelemente, insbesondere Leuchtdioden, angeordnet sind, sodaß bei Aktivierung eines Schwellwertes 30, 31, 36 das entsprechende Anzeigeelement zu leuchten beginnt, sodaß der Benutzer eine optische Anzeige für den gerade eingeleiteten Steuerablauf bzw. der Funktionsumschaltung erhält.

Wie aus der Fig. 3 ersichtlich ist, werden mehrere, insbesondere drei Schwellwerte 30, 31, 36 definiert, wobei beispielsweise der erste Schwellwert 30 für das Umschalten des Schweißstromes 29, der zweite Schwellwert 31 für die Umschaltung der Drahtfördergeschwindigkeit und der dritte Schwellwert 36 für die Freigabe und Durchführung des Schweißendeprogrammes definiert ist.

Grundsätzlich ist hierzu zu erwähnen, daß die Schwellwerte 30, 31, 36 in diesem Ausführungsbeispiel oberhalb der Schweiß- oder Lichtbogenspannung 28 beim Start des Schweißprozesses bzw. zum Zeitpunkt 27 angeordnet sind, sodaß der Benutzer durch einfaches kurzzeitiges Abheben des Schweißbrenners 10 vom Werkstück 16 eine Auswahl der unterschiedlichen Funktionen bzw. Abläufe vornehmen kann. Selbstverständlich ist es möglich, daß die Schwellwerte 30, 31, 36 auch unterhalb der normalen Schweiß- oder Lichtbogenspannung 28, z.B. nach dem Zeitpunkt 27 definiert werden können.

Wie zuvor beschrieben, wird bei Überschreiten eines Schwellwertes 30, 31, 36 die entsprechende Funktion oder ein entsprechender Steuerablauf durchgeführt, wobei beispielsweise zusätzlich ein entsprechendes Anzeigeelement - nicht dargestellt - am Schweißbrenner 10 aktiviert wird.

Das Aufrufen einer Funktion bzw. eines definierten Steuerablaufes erfolgt bei dem dargestellten Ausführungsbeispiel derartig, daß die Schweiß- oder Lichtbogenspannung 28 über einen entsprechenden Schwellwert 30, 31, 36 angehoben werden muß, wobei diese über eine bestimmte Zeitdauer 37, beispielsweise von 2 Sekunden, in diesem Bereich gehalten werden muß, um diesen Schwellwert 30, 31, 36 auszuwählen. Dies ist insofern notwendig, da nunmehr mehrere Schwellwerte 30, 31, 36 angeordnet sind, sodaß beispielsweise zum Erreichen des oberen Schwellwertes 36 bereits die beiden unterhalb angeordneten bzw. definierten Schwellwerte 30,31 überschritten werden müssen.

Für die Funktionsbeschreibung dieses Ausführungsbeispiels wurden nunmehr in Fig. 3 die wesentlichsten Abläufe in Form von Diagrammen des Schweißprozesses dargestellt, wobei im ersten Diagramm die Schweiß- oder Lichtbogenspannung 28, im zweiten Diagramm der Schweißstrom 29 und im dritten Diagramm die Drahtvorschubgeschwindigkeit 38 schematische aufgetragen ist.

Nach dem Start des Schweißprozesses wird zu einem beliebigen Zeitpunkt 39 vom Benutzer der Schweißbrenner 10 vom Werkstück 16 abgehoben, wodurch sich die Schweiß- oder Lichtbogenspannung 28 erhöht. Der Benutzer kann nun durch die Anzeigeelemente erkennen, wann der erste Schwellwert 30 überschritten wird, da diese bei Überschreiten von der Steuervorrichtung 4 aktiviert wird. Will nun der Benutzer die Funktion bzw. den Steuerablauf zu dem ersten Schwellwert 30 auswählen bzw. aktivieren, so behält der Benutzer den Schweißbrenner 4 über die definierte Zeitdauer 37, bevorzugt von ca. 2 Sekunden, in dieser Position. Durch zusätzliche Überwachung der Zeitdauer 37 kann die Steuervorrichtung 4 erkennen, daß nunmehr die Funktion bzw. der Steuerablauf zu dem ersten Schwellwert 30 aktiviert werden soll, d.h., daß in dem dargestellten Ausführungsbeispiel der Schweißstrom 29 von einem ersten Wert auf einen weiteren Wert erhöht werden soll. Anschließend kann der Benutzer den Schweißbrenner 4 wiederum in die ursprüngliche Position bringen, sodaß die Schweiß- oder Lichtbogenspannung 28 unterhalb des Schwellwertes 30 abgesenkt wird und somit das Anzeigeelement deaktiviert wird. Hierbei ist es beispielsweise auch möglich, daß bei einer zweimaligen Auswahl dieses Schwellwertes 30 eine Rückstellung des Schweißstromes 29 auf den ursprünglichen Wert erzielt werden kann.

Damit der Benutzer die Funktion bzw. den Steuerablauf für den zweiten Schwellwert 31 aktivieren kann, ist es wiederum notwendig, daß die Schweiß- oder Lichtbogenspannung 28 entsprechend erhöht wird. Zum Zeitpunkt 40 wird vom Benutzer der Schweißbrenner 10 wiederum vom Werkstück 16 abgehoben, wodurch sich die Schweiß- oder Lichtbogenspannung 28 und somit die Lichtbogenlänge des Lichtbogens 15 aufgrund der Widerstandsänderung erhöht. Nachdem der erste Schwellwert 30 überschritten wird, wird vom Benutzer eine weitere Entfernung des Schweißbrenners 10 durchgeführt, sodaß die Schweiß- oder Lichtbogenspannung 28 weiter angehoben wird. Überschreitet nunmehr die Schweiß- oder Lichtbogenspannung 28 den zweiten Schwellwert 31, so aktiviert die Steuervorrichtung 4 das Anzeigeelement für den zweiten Schwellwert 31, sodaß dies der Benutzer erkennen kann und dieser den Schweißbrenner 10 in dieser Position über die notwendige Zeitdauer 37 zum Aktivieren der hinterlegten Funktion bzw. des hinterlegten Steuerablaufes halten kann, d.h., daß in dem dargestellten Ausführungsbeispiel nach Ablauf der definierten Zeitdauer 37 die Drahtvorschubgeschwindigkeit 38 beispielsweise erhöht wird.

Möchte der Benutzer den Schweißprozeß beenden, so entfernt er wiederum entsprechend dem zuvor beschriebenen Ablauf den Schweißbrenner 10 vom Werkstück 16, bis das dritte Anzeigeelement für den Schwellwert 36 zu leuchten beginnt, wie dies zum Zeitpunkt 41 ersichtlich ist, sodaß nach Ablauf der Zeitdauer 37 die hinterlegte Funktion, also das Schweißendeprogramm, aktiviert wird. Nunmehr wird gleichzeitig mit dem Überschreiten des Schwellwertes 36 das Schweißendeprogramm aktiviert und durchgeführt und der Schweißstrom 29 wird rampenförmig unter Beibehaltung der Schutzgasatmosphäre beendet.

Durch eine derartige Steuerung des Schweißgerätes 1 wird also erreicht, daß eine Umschaltung unterschiedlicher Schweißparameter, Betriebsarten, Schweißprogramme usw., vom Benutzer ohne Betätigung eines Schaltelementes oder eine Änderung an der Einstellung des Schweißgerätes 1 gesteuert werden kann, wobei der gerade durchgeführte Schweißprozeß nicht unterbrochen bzw. beendet werden muß, d.h., daß während des Schweißprozesses eine Umschaltung des Schweißgerätes 1 durch eine definierte Bewegung des Schweißbrenners 10, insbesondere der Funktionen und/oder der Betriebsarten und/oder der Schweißparameter und/oder der Schweißprogramme, ohne Unterbrechen des Schweißprozesses, insbesondere ohne Unterbrechung des Lichtbogens 15, erfolgt, wobei für das Umschalten ein Schweißparameter, insbesondere eine Schweiß- oder Lichtbogenspannung 28 und/oder ein Schweißstrom 29, überwacht wird, und die Steuervorrichtung 4 bei Überschreiten und/oder Unterschreiten eines Schwellwertes 30, 31, 36 des Schweißparameters die Umschaltung des Schweißgerätes 1 durchführt.

Selbstverständlich ist es möglich, daß eine beliebige Anzahl von Schwellwerten 30, 31, 36 hinterlegt wird. Es ist auch möglich, daß der Benutzer den einzelnen Schwellwerten 30, 31, 36 die entsprechenden Funktionen bzw. Steuerabläufe zuordnen kann, wobei die einzelnen Schweißparameter vor dem Start des Schweißprozesses eingestellt oder von der Steuervorrichtung 4 festgelegt werden. Es ist weiters auch möglich, daß mit einem Schwellwert 30 oder 31 oder 36 mehrere Funktionen bzw. Steuerabläufe aktiviert werden können. Dies kann beispielsweise derartig erfolgen, daß der Schwellwert 30, 31, 36 in einen bestimmten Rhythmus bzw. innerhalb einer vorgegebenen Zeitdauer mehrmals überschritten bzw. unterschritten werden muß, d.h., daß beispielsweise bei einmaliger Überschreitung die erste Funktion bzw. der erste Steuerablauf aktiviert wird, wobei bei zweimaliger oder mehrmaliger Überschreitung die zweite Funktion bzw. der zweite Steuerablauf, usw. ausgewählt werden kann.

Selbstverständlich ist es aber auch möglich, die Entfernung zwischen dem Schweißbrenner 10 und dem Werkstück 16 nicht, wie zuvor beschrieben, über die Auswertung der Schweiß- oder Lichtbogenspannung und/oder dem Schweißstrom durchzuführen, sondern hierzu eine optische Einrichtung zu verwenden. Diese optische Einrichtung ist zweckmäßigerweise am Schweißbrenner 10 angeordnet und kann durch alle aus dem Stand der Technik bekannten Entfernungsmeßeinrichtungen gebildet sein. Durch Auswertung der von dieser optischen Einrichtung gelieferten Daten können wiederum die zuvor beschriebenen Verfahren durchgeführt werden.

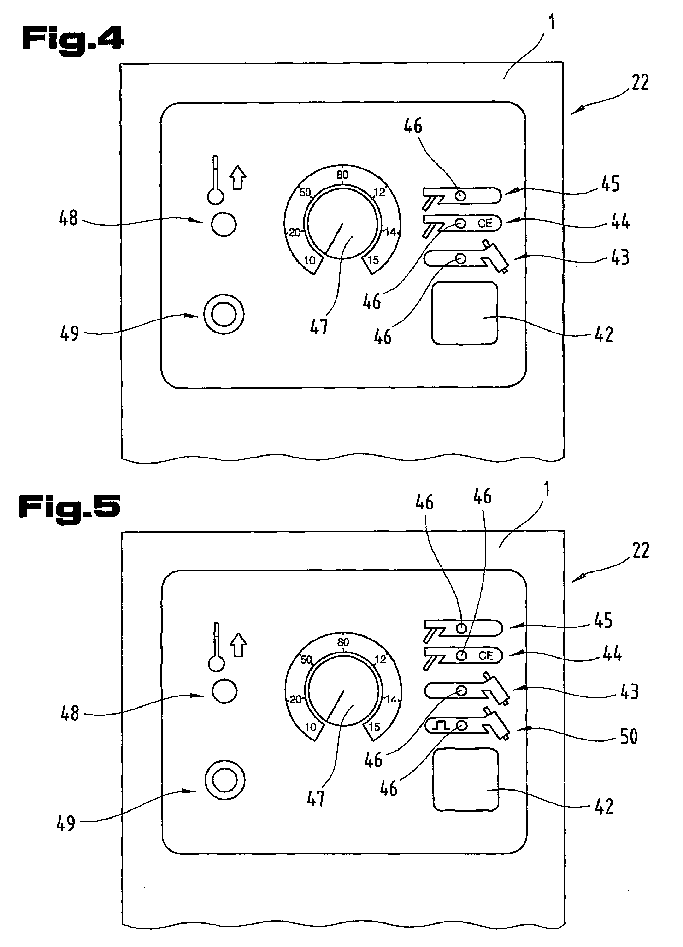

In den Fig. 4 und 5 ist eine Frontansicht eines nicht erfindungsgemäßen Schweißgerätes 1, insbesondere eines WIG-Schweißgerätes, dargestellt, wobei hierzu im Detail zwei Ausführungsbeispiele einer Ein- und/oder Ausgabevorrichtung 22 dargestellt sind.

Hierzu kann mit einem Taster 42 zwischen den einzelnen Betriebsarten, wie beispielsweise einem WIG-Mode 43, einem CEL-Mode 44 und einem Elektroden-Mode 45, umgeschaltet werden, wobei den einzelnen Betriebsarten Anzeigeelemente 46, beispielsweise in Form von Leuchtdioden, zugeordnet sind, sodaß je nach Auswahl die entsprechende Leuchtdiode zu leuchten beginnt. Über einen Drehgeber 47 kann der Benutzer für die entsprechende Betriebsart eine entsprechende Sollwerteinstellung vornehmen. Weiters weist die dargestellte Ein- und/oder Ausgabevorrichtung 22 ein Anzeigeelement 48 für die Übertemperatur sowie eine Anschlußbuchse 49 für die Schweißleitung 17 - in den Fig. 4 und 5 nicht dargestellt - auf.

Damit nunmehr mit dieser einfach und kostengünstigen Ein- und/oder Ausgabevorrichtung 22 mehrere unterschiedliche Schweißparameter eingestellt werden können, ist es möglich, daß bei dem dargestellten Ausführungsbeispiel mit dem einzigen Taster 42 der Ein- und/oder Ausgabevorrichtung 22 ein sogenanntes Hintergrundmenü aufgerufen werden kann. Dies erfolgt derartig, daß durch entsprechendes Drücken des Tasters 42 die Bedienungsoberfläche umgeschaltet wird, wodurch in dem sogenannten Hintergrundmenü ein für die aktuelle Betriebsart charakteristischer Wert bzw. Schweißparameter verändert werden kann, d.h., daß bei der Betätigung des Tasters 42 über eine definierte Zeitdauer eine Umschaltung der Ein- und/oder Ausgabevorrichtung 22 auf zumindest einen weiteren charakteristischen Schweißparameter für die eingestellte Betriebsart durchgeführt wird. Dabei kann ein Wert bzw. der Schweißparameter beispielsweise bei der Betriebsart - Elektroden-Mode 43 - für die Dynamik, bei der Betriebsart - CEL-Mode 44 - für die Neigung der fallenden Kennlinie, und bei der Betriebsart - WIG-Mode 45 - für die zuvor beschriebenen Schwellwerte 30, 31 eingestellt werden. Bei dem in Fig. 5 dargestellten Schweißgerät 1 wurde die Ein- und/oder Ausgabevorrichtung 22 durch eine Betriebsart - WIG-Puls-Mode 50 - ergänzt, wobei im Hintergrundmenü für diese Betriebsart beispielsweise die Pulsfrequenz verändert werden kann.

Die Verstellung bzw. Anzeige des entsprechenden Wertes bzw. des Wertes für den entsprechenden Schweißparameter wird nunmehr nicht über den Drehgeber 47 verändert bzw. eingestellt, sondern wird durch die Anzeigeelemente 46 repräsentiert bzw. bestimmt, d.h., daß je nach Anzahl der leuchtenden bzw. nicht leuchtenden Anzeigeelemente 46 ein entsprechend hinterlegter Wert ausgewählt werden kann.

Dies kann derartig erfolgen, daß nach dem Umschalten auf das sogenannte Hintergrundmenü, also nach einem längeren Betätigen des Tasters 42 beispielsweise über eine Zeitdauer von ca. 2 Sekunden, sämtliche Anzeigeelemente 46 deaktiviert werden, wobei dies dem kleinsten Wert für diesen Schweißparameter entspricht. Bleibt der Taster 42 weiterhin gedrückt oder wird dieser nunmehr kurzzeitig betätigt, so beginnen die einzelnen Anzeigeelemente 46 aufeinanderfolgend zu leuchten, d.h., daß nach einer definierten Zeitdauer das erste Anzeigeelement 46 und nach einer weiteren Zeitdauer das zweite Anzeigeelement 46 usw. zu leuchten beginnt, wobei den einzelnen Anzeigeelementen 46 nunmehr unterschiedliche Werte zugeordnet sind und somit in einfacher Form eine Einstellung des Schweißgerätes 1 vorgenommen werden kann. Die Anzahl der aktivierten Anzeigeelemente 46 gibt somit über die Höhe bzw. dem Wert des charakteristischen Schweißparameters Auskunft, d.h., daß bei dem Ausführungsbeispiel gemäß Fig. 4 für jeden im Hintergrund definierten charakteristischen Schweißparameter der unterschiedlichen Betriebsarten vier unterschiedliche Werte eingestellt werden können, wogegen bei dem Ausführungsbeispiel gemäß Fig. 5 durch die zusätzliche Betriebsart fünf unterschiedliche Werte hinterlegt sind. Grundsätzlich ist hierzu zu erwähnen, daß die Ausbildung der Ein- und/oder Ausgabevorrichtung 22 nicht auf die dargestellten Ausführungsbeispiele beschränkt ist, sondern bei jeder bekannten Ein- und/oder Ausgabevorrichtung 22 ein derartiges Hintergrundmenü verwirklicht werden kann.

Wird beispielsweise die Betriebsart - WIG-Mode 43 - ausgewählt, so können die Schwellwerte 30, 31 vom Benutzer voreingestellt werden. Dies erfolgt bei dieser Art der Einstellung derartig, daß beispielsweise für die ersten beiden Anzeigeelemente 46 - also kein Anzeigeelement 46 oder das erste Anzeigeelement 46 für die Betriebsart -WIG-Mode 43-leuchtet-jeweils ein entsprechender Wert für den oberen Schwellwert 30 hinterlegt ist, wogegen für die beiden weiteren Möglichkeiten - also die Anzeigeelemente 46 für die Betriebsarten CEL-Mode 44 oder Elektroden-Mode 45 leuchten - jeweils ein Wert für den unteren Schwellwert 31 hinterlegt ist. Damit kann der Benutzer zwischen zwei unterschiedlichen Schwellwerten 30, 31 auswählen. Die Einstellung der Schwellwerte 30, 31 kann auch derartig erfolgen, daß die Verstellung der beiden Schwellwerte 30, 31 gleichzeitig erfolgt, sodaß eine Verschiebung der beiden Schwellwerte 30, 31 noch oben oder unten bei einer vordefinierter Hysterese erfolgt.

Selbstverständlich ist es möglich, daß mehrere Anzeigeelemente 46 angeordnet sein können, denen wiederum jeweils ein entsprechender Wert zugeordnet sein kann. Es ist auch möglich, daß die Steuerung der Anzeigeelemente 46 in Form eines Binärcodes erfolgt, sodaß für den charakteristischen Schweißparameter einer Betriebsart noch weitere Werte hinterlegt sein können.

Durch eine derartige Einstellmöglichkeit, also einer sogenannten Doppelbelegung von Elementen, wird in vorteilhafter Weise erreicht, daß eine erhebliche Einsparung von Bauelementen, wie Taster 42, Drehgeber 47, Anzeigeelemente 46 usw, eingespart werden können, wobei jedoch der Benutzer die Möglichkeit hat, unterschiedliche Werte für einen bestimmten Schweißparameter zu einer bestimmten Betriebsart des Schweißgerätes 1 auswählen zu können. Damit kann die Ein- und/oder Ausgabevorrichtung 22 für ein Schweißgerät 1 kostengünstig hergestellt werden und es wird eine erhebliche Größenreduktion der Ein- und/oder Ausgabevorrichtung 22 erzielt, sodaß ein kompaktes kleines Schweißgerät 1 mit mehreren Einstellmöglichkeiten mit nur einem Taster 42 geschaffen werden kann.

Es ist jedoch auch möglich, daß das Hintergrundmenü derartig ausgelegt bzw. programmiert wird, daß nach dem Aktivieren des Hintergrundmenüs, also nach dem Betätigen des Tasters 42 über eine bestimmte Zeitdauer, jedem Anzeigeelement 46 ein bestimmter Schweißparameter zugeordnet wird, wobei die Einstellung des Wertes für die unterschiedlichen Schweißparameter, also dem ausgewählten Anzeigeelement 46, über den Drehgeber 47 erfolgt, d.h., daß für jede Betriebsart mehrere Schweißparameter eingestellt bzw. verändert werden können, wobei die Festlegung des neuen Wertes bzw. der Höhe des Schweißparameters über den Drehgeber 47 durchgeführt wird.

Der Ordnung halber sei abschließend darauf hingewiesen, daß zum besseren Verständnis des Schweißgerätes 1 dieses bzw. dessen Bestandteile teilweise unmaßstäblich und/oder vergrö-βert und/oder verkleinert dargestellt wurden.

### Bezugszeichenaufstellung

- 1: Schweißgerät
- 2: Schweißstromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Schweißleitung
- 18: Schweißleitung
- 19: Kühlkreislauf
- 20: Strömungswächter

- 21: Wasserbehälter
- 22: Ein- und/oder Ausgabevorrichtung
- 23: Schlauchpaket
- 24: Verbindungsvorrichtung
- 25: Zugentlastungsvorrichtung

- 26: Gehäuse
- 27: Zeitpunkt
- 28: Schweiß- oder Lichtbogenspannung
- 29: Schweißstrom
- 30: Schwellwert

- 31: Schwellwert
- 32: Zeitdauer
- 33: Zeitpunkt
- 34: Zeitpunkt
- 35: Zeitpunkt

- 36: Schwellwert
- 37: Zeitdauer
- 38: Drahtvorschubgeschwindigkeit
- 39: Zeitpunkt
- 40: Zeitpunkt

- 41: Zeitpunkt
- 42: Taster
- 43: WIG-Mode
- 44: CEL-Mode
- 45: Elektroden-Mode

- 46: Anzeigeelement
- 47: Drehgeber
- 48: Anzeigeelement
- 49: Anschlußbuchse
- 50: WIG-Puls-Mode

## Patentansprüche

1. Verfahren zum Steuern und/oder Regeln eines Schweißgerätes mit einem Schweißbrenner, bei dem nach dem Zünden eines Lichtbogens ein insbesondere aus mehreren unterschiedlichen Schweißparametern eingestellter Schweißprozeß durchgeführt wird, wobei die Steuerung und/oder Regelung des Schweißgerätes von einer Steuervorrichtung und/oder einer Schweißstromquelle durchgeführt wird, wobei zur Einleitung einer Aktivität ein vom Lichtbogen abhängiger Parameter, insbesondere eine Lichtbogenspannung und/oder ein Lichtbogenstrom, überwacht wird, **dadurch gekennzeichnet, daß** zum Beenden des Schweißprozesses ohne Unterbrechung des Lichtbogens durch eine definierte Bewegung des Schweißbrenners ein Schweißendeprogramm aufgerufen wird, wobei zum Aktivieren des Schweißendeprogrammes ein Schweißparameter, insbesondere die Schweiß- oder Lichtbogenspannung und/oder der Schweißstrom, überwacht wird und bei erstmaliger Überschreitung eines Schwellwertes das Schweißendprogramm von der Steuervorrichtung aktiviert wird, worauf bei Unterschreiten des oder eines weiteren Schwellwertes dieses von der Steuervorrichtung ausgeführt wird.

2. Verfahren nach Anspruch 1, **dadurch gekennzeichnet, daß** ein oberer und ein unterer Schwellwert der Schweiß- oder Lichtbogenspannung festgelegt werden und bei erstmaliger Überschreitung des oberen Schwellwertes das Schweißendprogramm aktiviert wird, worauf bei Unterschreiten des weiteren unteren Schwellwertes das Schweißendeprogramm ausgeführt wird.

3. Verfahren nach einem der vorhergehenden Ansprüche, **dadurch gekennzeichnet, daß** beim Durchführen des Schweißendeprogrammes der Schweißprozeß, insbesondere der Schweißstrom, entsprechend einer vorgegebenen Funktion bzw. Kennlinie beendet wird.

4. Verfahren nach einem oder mehreren der vorhergehenden Ansprüche, **dadurch gekennzeichnet, daß** der Schweißstrom entsprechend einer rampenförmigen Kennlinie abgesenkt wird.

5. Verfahren nach einem oder mehreren der vorhergehenden Ansprüche, **dadurch gekennzeichnet, daß** die Schwellwerte der Schweiß- oder Lichtbogenspannung entsprechend dem eingestellten Schweißprozeß, insbesondere der eingestellten oder sich einstellenden Schweiß- oder Lichtbogenspannung und/oder des Schweißstromes, von der Steuervorrichtung berechnet bzw. festgelegt werden.

6. Verfahren nach einem oder mehreren der vorhergehenden Ansprüche, **dadurch gekennzeichnet, daß** die definierte Bewegung des Schweißbrenners durch Entfernen bzw. Abheben und/oder Annähern an das Werkstück gebildet wird.

7. Schweißgerät mit einer Schweißstromquelle, einer Steuervorrichtung und einem Schweißbrenner, wobei die Schweißstromquelle und/oder Steuervorrichtung mit zumindest einer Vorrichtung zum ermitteln einer Schweiß- oder Lichtbogenspannung und/oder eines Schweißstromes ausgebildet sind, **dadurch gekennzeichnet, dass** die Steuervorrichtung (4) Mittel zur Durchführung des folgenden Verfahrens aufweist: Überwachen eines vom Lichtbogen abhängigen Parameters, insbesondere einer Lichtbogenspannung und/oder eines Lichtbogenstroms, zur Einleitung einer Aktivität, wobei zum Beenden des Schweißprozesses ohne Unterbrechung des Lichtbogens durch eine definierte Bewegung des Schweißbrenners ein Schweißendeprogramm aufgerufen wird, wobei zum Aktivieren des Schweißendeprogrammes ein Schweißparameter, insbesondere die Schweiß- oder Lichtbogenspannung und/oder der Schweißstrom, überwacht wird und bei erstmaliger Überschreitung eines Schwellwertes das Schweißendprogramm von der Steuervorrichtung aktiviert wird, worauf bei Unterschreiten des oder eines weiteren Schwellwertes dieses von der Steuervorrichtung ausgeführt wird.

8. Schweißgerät nach Anspruch 7, **dadurch gekennzeichnet, daß** der Schweißbrenner (10) mit einer optischen Einrichtung zur Ermittlung einer Entfernung zwischen dem Schweißbrenner (10) und dem Werkstück (16) ausgebildet ist.

## Claims

1. Method of controlling and/or regulating a welding apparatus with a welding torch, whereby, when an arc has been ignited, a set welding process based on several different welding parameters is run and the welding apparatus is controlled and/or regulated by a control system and/or a welding current source, and in order to initiate an action, a parameter dependent on the arc, in particular an arc voltage and/or an arc current is monitored, **characterised in that** in order to terminate the welding process without cutting off the arc, a welding-end programme is retrieved due to a defined movement of the welding torch, and in order to activate the welding-end programme, a welding parameter, in particular the welding voltage or arc voltage and/or the welding current, is monitored and the welding programme is activated by the control system the first time a threshold value is exceeded and is then run when there is a drop below the or another threshold value.

2. Method as claimed in claim 1, **characterised in that** an upper and a lower threshold value of the welding voltage or arc voltage are set and the welding-end programme is activated the first time the upper threshold value is exceeded and the welding-end programme is run when there is a drop below the other lower threshold value.

3. Method as claimed in one of the preceding claims, , **characterised in that** when the welding programme is run, the welding process, in particular the welding current, is terminated on the basis of a predefined function or characteristic curve.

4. Method as claimed in one of the preceding claims, **characterised in that** the welding current is reduced on the basis of a ramp-shaped characteristic curve.

5. Method as claimed in one of the preceding claims, **characterised in that** the threshold values of the welding voltage or arc voltage are calculated and set by the control system as a function of the set welding process, in particular the welding voltage or arc voltage and/or welding current which has been set or has to be set.

6. Method as claimed in one or more of the preceding claims, **characterised in that** the defined movement of the welding torch involves moving or lifting it away from and/or moving it towards the workpiece.

7. Welding apparatus with a welding current source, a control system and a welding torch, which welding current source and/or control system is provided with at least one device for determining a welding voltage or arc voltage and/or a welding current, **characterised in that** the control system (4) has means for implementing the following method: monitoring a parameter dependent on the arc, in particular an arc voltage and/or an arc current, in order to initiate an action, a welding-end programme is retrieved in order to terminate the welding process without cutting off the arc due to a defined movement of the welding torch, and in order to activate the welding-end programme, a welding parameter, in particular the welding voltage or arc voltage and/or the welding current is monitored, and the welding programme is activated by the control system the first time a threshold value is exceeded and is then run when there is a drop below the or another threshold value.

8. Welding apparatus as claimed in claim 7, **characterised in that** the welding torch (10) is provided with an optical system for detecting a distance between the welding torch (10) and the workpiece (16).

## Revendications

1. Procédé de commande et/ou de régulation d'un appareil de soudage avec un chalumeau, dans lequel, après l'allumage d'un arc, un processus de soudage réglé en particulier avec plusieurs paramètres de soudage différents est exécuté, où la commande et/ou la régulation de l'appareil de soudage est exécutée par un dispositif de commande et/ou une source de courant de soudage, où pour introduire une activité, un paramètre dépendant de l'arc, en particulier une tension d'arc et/ou un courant d'arc, est surveillé, **caractérisé en ce que** pour terminer le processus de soudage sans interrompre l'arc, par un mouvement défini du chalumeau, un programme de fin de soudage est appelé, où pour l'activation du programme de fin de soudage, un paramètre de soudage, en particulier la tension de soudage ou d'arc et/ou le courant de soudage, est surveillé et, lors d'un premier dépassement d'une valeur de seuil, le programme de fin de soudage est activé par le dispositif de commande, où lors d'une non-atteinte de la ou d'une autre valeur de seuil, celui-ci est exécuté par le dispositif de commande.

2. Procédé selon la revendication 1, **caractérisé en ce qu'**une valeur de seuil supérieure et une valeur de seuil inférieure de la tension de soudage ou d'arc sont fixées et, lors du premier dépassement de la valeur de seuil supérieure, le programme de fin de soudage est activé, où lors d'une non-atteinte de l'autre valeur de seuil inférieure, le programme de fin de soudage est exécuté.

3. Procédé selon l'une des revendications précédentes, **caractérisé en ce que** lors de l'exécution du programme de fin de soudage, le processus de soudage, en particulier le courant de soudage, est terminé en accord avec une fonction ou ligne caractéristique prédéfinie.

4. Procédé selon l'une ou plusieurs des revendications précédentes, **caractérisé en ce que** le courant de soudage est abaissé selon une ligne caractéristique en forme de rampe.

5. Procédé selon l'une ou plusieurs des revendications précédentes, **caractérisé en ce que** les valeurs de seuil de la tension de soudage ou d'arc sont calculées respectivement fixées conformément au processus de soudage réglé, en particulier de la tension de soudage ou d'arc réglée ou se réglant et/ou du courant de soudage, par le dispositif de commande.

6. Procédé selon l'une ou plusieurs des revendications précédentes, **caractérisé en ce que** le mouvement défini du chalumeau est réalisé par la mise à distance respectivement le relèvement et/ou l'approche à la pièce.

7. Appareil de soudage avec une source de courant de soudage, un dispositif de commande et un chalumeau, où la source de courant de soudage et/ou le dispositif de commande sont réalisés avec au moins un dispositif pour déterminer une tension de soudage ou d'arc et/ou un courant de soudage, **caractérisé en ce que** le dispositif de commande (4) présente des moyens pour l'exécution du procédé suivant : surveiller un paramètre dépendant de l'arc, en particulier une tension d'arc et/ou un courant d'arc, pour introduire une activité, où pour terminer le processus de soudage sans interruption de l'arc, par un mouvement défini du chalumeau, un programme de fin de soudage est appelé, où pour l'activation du programme de fin de soudage un paramètre de soudage, en particulier la tension de soudage ou d'arc et/ou le courant de soudage, est surveillé, et lors d'un premier dépassement de la valeur de seuil, le programme de fin de soudage est activé par le dispositif de commande, où lors d'une non-atteinte de la ou d'une autre valeur de seuil, celui-ci est exécuté par le dispositif de commande.

8. Appareil de soudage selon la revendication 7, **caractérisé en ce que** le chalumeau (10) est réalisé avec une installation optique pour déterminer une distance entre le chalumeau (10) et la pièce (16).
